# EUROPÄISCHE PATENTANMELDUNG

(11) **EP 2 626 575 A1**
(43) Veröffentlichungstag der Anmeldung: **14.08.2013**
(21) Anmeldenummer: 13153040.4
(22) Anmeldetag: 29.01.2013
(51) Int. Cl.: F16B 7/18, F16L 3/22

(54) **Konsole**

(30) Priorität: 09.02.2012 DE 102012201936
(71) Anmelder: HILTI Aktiengesellschaft, 9494 Schaan (LI)
(72) Erfinder: Merhar, Thomas, 9494 Schaan (LI)

(57) **Zusammenfassung**

Die Erfindung betrifft eine Konsole zum Befestigen einer Schienenanordnung an einer Wand, mit einer Basis, an der ein Profilschienenstück befestigt ist, wobei die Basis eine Grundplatte mit zumindest einer Durchgangsöffnung aufweist, durch welche zum Verankern der Basis an der Wand ein Ankerbolzen hindurchführbar ist. Erfindungsgemäss ist vorgesehen, dass die Basis zwei Auflageflügel aufweist, welche eine Auflageebene zur Auflage an der Wand bilden, und welche über jeweils ein Flankenelement mit der Grundplatte verbunden sind, wobei die Auflageflügel, die Flankenelemente und die Grundplatte zumindest bereichsweise im Querschnitt der Basis ein Hutprofil bilden.

## Beschreibung

Die Erfindung betrifft eine Konsole, die zum Befestigen einer Schienenanordnung an einer Wand geeignet ist, insbesondere für die Installationstechnik, gemäss dem Oberbegriff des Anspruchs 1. Eine solche Konsole, insbesondere Wandkonsole, ist ausgestattet mit einer Basis, an der ein Profilschienenstück befestigt ist, wobei die Basis eine Grundplatte mit zumindest einer Durchgangsöffnung aufweist, durch welche zum Verankern der Basis an der Wand ein Ankerbolzen hindurchführbar ist.

Konsolen sind häufig wesentliche Bestandteile von Schienensystemen, da mit diesen Konsolen Schienenanordnungen an der Wand und damit am Gebäude fixiert werden können. Sie weisen in der Regel eine Basis auf, die an der Wand befestigt werden kann, und an der ein Profilschienenstück vorgesehen ist, welches mit der Schienenanordnung kompatibel ist.

Es sind Konsolen bekannt, bei denen eine flache Platte als Basis vorgesehen ist. An diese Platte wird das Profilschienenstück mittels einer Kehlnaht angeschweisst und die gesamte Konsole danach verzinkt. Die Verzinkung eines relativ grossen Bauteils kann jedoch relativ kostenintensiv sein.

Eine Konsole mit einer flachen Basisplatte ist beispielsweise aus der DE 33 09 758 A1 bekannt.

Aufgabe der Erfindung ist es, eine Konsole anzugeben, die bei hoher Tragfähigkeit und Korrosionsbeständigkeit besonders günstig in der Herstellung ist.

Die Aufgabe wird erfindungsgemäss durch eine Konsole mit den Merkmalen des Anspruchs 1 gelöst. Bevorzugte Ausführungsformen sind in den abhängigen Ansprüchen angegeben.

Eine erfindungsgemässe Konsole ist dadurch gekennzeichnet, dass die Basis zwei Auflageflügel aufweist, welche eine Auflageebene zur Auflage an der Wand bilden, und welche über jeweils ein Flankenelement mit der Grundplatte verbunden sind, wobei die Auflageflügel, die Flankenelemente und die Grundplatte zumindest bereichsweise im Querschnitt der Basis ein Hutprofil bilden.

Ein erster Grundgedanke der Erfindung kann darin gesehen werden, die Basis mit zwei Auflageflügeln auszustatten, die jeweils über ein Flankenelement stufenförmig mit der Grundplatte verbunden sind. Die Auflageflügel liegen bei montierter Konsole auf der Wand auf, d.h. im Gegensatz zu Lösungen aus dem Stand der Technik liegt die Grundplatte nach der Erfindung nicht mehr unmittelbar, sondern lediglich mittelbar, nämlich über die beiden Flügel, an der Wand an. Erfindungsgemäss bilden die Grundplatte, die Auflageflügel und die Flankenelemente im Querschnitt der Basis ein Hutprofil, was insbesondere beinhaltet, dass die Flankenelemente im Querschnitt der Basis senkrecht nach unten von der Grundplatte abstehen, und dass die Auflageflügel wiederum rechtwinklig nach aussen von ihrem jeweiligen Flankenelement abstehen. Demgemäss stehen die beiden Auflageflügel auf gegenüberliegenden Seiten der Grundplatte über die Grundplatte über, wobei beide Auflageflügel in einer zweiten Ebene verlaufen, welche parallel und mit Abstand zur ersten Ebene verläuft, in der die Grundplatte liegt. Insbesondere sind die Auflageflügel in einer senkrecht zur Auflageebene stehenden Richtung relativ zur Grundplatte versetzt.

Die Erfindung hat erkannt, dass mit solch einer Anordnung eine Basis realisiert werden kann, welche in ihrer Steifigkeit und Festigkeit einer deutlich dickeren Platte aus Vollmaterial entspricht. Somit kann erfindungsgemäss ein vergleichsweise dünnes Blech, beispielsweise mit einer Blechstärke von 3 mm, als Ausgangswerkstoff verwendet werden. Da bei solch geringen Blechstärken die Blechschnittkanten auch ohne Zinkschicht kathodisch geschützt sind, ist es erfindungsgemäss überdies möglich, ein vorverzinktes Material als Ausgangswerkstoff für die Basis zu verwenden, welches dann beispielsweise durch Stanzen vereinzelt wird, wobei eine nachträgliche Verzinkung erfindungsgemäss ohne wesentliche Einbussen in der Korrosionsbeständigkeit entfallen kann. Somit wird erfindungsgemäss ein besonders kostengünstiges Bauteil erhalten.

Die Grundplatte und/oder die Auflageflügel sind zweckmässigerweise eben ausgebildet. Die Durchgangsöffnung kann zumindest eine Lochachse definieren, die in einer Querschnittsebene der Basis und/oder senkrecht zur Auflageebene verläuft. Insbesondere können die Auflageflügel in Richtung der Lochachse relativ zur Grundplatte versetzt sein. Die Profilschiene ist bevorzugt eine C-Profilschiene, also insbesondere eine Schiene mit einem durchgängigen Längsschlitz, der in einen Innenraum der Schiene führt. Zusätzlich zum Längsschlitz kann die Schiene auch weitere Ausnehmungen, beispielsweise Langlöcher, aufweisen. Bei dem Ankerbolzen kann es sich insbesondere um eine Schraube handeln. Der Ankerbolzen weist bevorzugt einen Schaft zum Durchführen durch die Durchgangsöffnung und einen Kopf auf, der auf der Grundplatte aufliegen kann, wenn der Schaft durch die Durchgangsöffnung durchgeführt ist.

Besonders bevorzugt ist es, dass die beiden Flankenelemente gleich breit sind, wobei ihre Breite die Hälfte der Breite der Grundplatte beträgt. Durch die bevorzugte Breitenauswahl kann gewährleistet werden, dass der Massenschwerpunkt des Querschnitts der Basis ungefähr auf halber Höhe und/oder möglichst nahe beim geometrischen Mittelpunkt der Querschnittsfläche der Basis liegt. Hierdurch wird eine besonders hohe Festigkeit, insbesondere gegenüber einer Biegung um parallel zur Breitenrichtung verlaufende Biegeachsen, erhalten. Die Breite kann insbesondere eine Abmessung in der Querschnittsebene der Basis und/oder eine Abmessung in der Auflageebene und/oder eine Abmessung senkrecht zur Lochachse der Durchgangsöffnung und/oder eine Abmessung senkrecht zu einer Längsachse der Grundplatte sein.

Um eine mit Vollmaterial vergleichbare Steifigkeit und/oder Festigkeit zu erzielen, kann es erforderlich sein, die Höhe der Platte grösser als die Blechstärke des entsprechenden Vollmaterials zu wählen.

Besonders bevorzugt ist es, dass die Durchgangsöffnung einen Kragen aufweist, der sich ausgehend von der Grundplatte zur Auflageebene hin erstreckt. Ein solcher Kragen, der um die Durchgangsöffnung herum angeordnet ist, kann Lasten aufnehmen, die bei der Befestigung der Basis auf dem Untergrund mittels des Ankerbolzens entstehen. Insbesondere kann der Kragen Vorspannkräfte im Ankerbolzen aufnehmen und ableiten, sobald er auf dem Untergrund aufsteht. Somit kann der Kragen verhindern, dass die Basis beim Befestigen am Untergrund übermässig deformiert wird, was die Steifigkeit der Basis beeinträchtigen könnte. Darüber hinaus kann das Aufstehen des Kragens am Untergrund und der damit einhergehende Axialkraftanstieg am Ankerbolzen dem Monteur eine Rückmeldung geben, dass die Basis hinreichend gut befestigt ist. Der Kragen ist an der Grundplatte angeordnet und erstreckt sich von dort, vorzugsweise parallel zur Lochachse der Durchgangsöffnung und/oder senkrecht zur Auflageebene, zur Auflageebene hin. Der Kragen kann beispielsweise durch Tiefziehen hergestellt sein. Sofern in der Grundplatte mehrere Durchgangsöffnungen zum Durchführen eines Ankerbolzens vorhanden sind, weist vorzugsweise zumindest eine der Durchgangsöffnungen einen solchen Kragen auf. Insbesondere können alle Durchgangsöffnungen jeweils einen solchen Kragen aufweisen.

Weiterhin kann zweckmässigerweise vorgesehen sein, dass der Kragen von der Auflageebene beabstandet ist. Durch einen kleinen Abstand des Kragens von der Auflageebene kann sichergestellt werden, dass die Basis primär mit ihrer äusseren Kontur, also an ihren Auflageflügeln, am Untergrund aufliegt, was eine besonders gute Krafteinleitung und eine besonders gute Stabilität zur Folge hat. Vorzugsweise ist der Abstand des Kragens von der Auflageebene kleiner als die Wandstärke der Auflageflügel.

Darüber hinaus ist es bevorzugt, dass die beiden Flankenelemente Bestandteile einer ringförmigen Zarge sind, welche sich am Umfang der Grundplatte an die Grundplatte anschliesst. Gemäss dieser Ausführungsform ist bei geringem Herstellungsaufwand eine mehrdimensionale Aussteifung gegeben, insbesondere auch gegenüber einer Biegung um senkrecht zur Breitenrichtung verlaufende Biegeachsen. Die ringförmige Zarge erstreckt sich ausgehend vom Umfang der Grundplatte in Richtung der Auflageebene, wobei die Flankenelemente von der Zarge gebildet werden. Die Zarge verläuft dabei zumindest bereichsweise senkrecht zur Auflageebene und/oder senkrecht zur Grundplatte. Sofern die Durchgangsöffnung einen Kragen aufweist, verläuft dieser im Inneren der Zarge. Für eine besonders gute Krafteinleitung kann die Zarge, insbesondere ausserhalb der Flankenelemente, von der Auflageebene beabstandet sein, wobei der Abstand, beispielsweise für eine besonders gute Aussteifung, zweckmässigerweise kleiner ist als die Wandstärke der Auflageflügel.

Ferner ist es vorteilhaft, dass die beiden Auflageflügel, insbesondere in der Auflageebene, voneinander getrennt sind. Gemäss dieser Ausführungsform sind die beiden Auflageflügel nicht unmittelbar, sondern nur mittelbar, nämlich über die Grundplatte sowie gegebenenfalls über die Zarge miteinander verbunden. Bei Draufsicht von oben auf die Grundplatte sind die beiden Auflageflügel demgemäss voneinander beabstandet und gehen nicht ineinander über. Dies kann eine besonders gute Krafteinleitung auch bei leicht unebenem Untergrund ermöglichen. Gemäss dieser Ausführungsform kann die Basis im Querschnitt ein Hutprofil und im Längsschnitt ein U-Profil aufweisen.

Eine andere vorteilhafte Weiterbildung der Erfindung liegt darin, dass die Durchgangsöffnung ein Langloch ist. Dies ermöglicht in besonders einfacher Weise eine Nachjustierung der Basis am Untergrund. Das Langloch erstreckt sich vorzugsweise längs der Auflageflügel, was insbesondere beinhalten kann, dass die Längsachse des Langlochs parallel zu der Längsachse der Auflageflügel verläuft und/oder dass die beiden parallelen Ränder des Langlochs parallel zu zumindest einem langen Rand der Auflageflügel verlaufen. Alternativ oder zusätzlich können die Längsachse des Langlochs und/oder seine beiden parallelen Ränder parallel zu der Längsachse der Grundplatte und/oder zumindest einem langen Rand der Grundplatte verlaufen. Insbesondere wenn das Langloch einen Kragen aufweist, kann es bei einer solchen Anordnung die die Grundplatte zusätzlich versteifen. Aus diesem Grund und/oder weil der Querschnitt der Grundplatte um die Langlochbreite verringert ist, können bei dieser Ausführungsform die seitlichen Auflageflügel mit vergleichsweise geringer Breite ausgeführt werden.

Insbesondere kann vorgesehen sein, dass eine Projektion des Profilschienenstücks auf die Grundplatte, vorzugsweise eine Projektion in Längsrichtung des Profilschienenstücks und/oder eine Projektion senkrecht zur Auflageebene der Auflageflügel, die Durchgangsöffnung zumindest bereichsweise überdeckt. Dies kann insbesondere bedeuten, dass die Durchgangsöffnung zumindest bereichsweise innerhalb einer fiktiven linearen Verlängerung des Profilschienenstücks liegt. Diese Ausgestaltung kann im Hinblick auf die kraftmässige Kopplung zwischen Schienenstück und Basis vorteilhaft sein. Denn einerseits kann in diesem Fall die Durchgangsöffnung in besonders einfacher Weise für eine Verbindung mit dem Schienenstück herangezogen werden. Andererseits kann, insbesondere wenn die Durchgangsöffnung mit einem Kragen ausgebildet ist, in diesem Fall die Kopplung zwischen Schienenstück und Basis an einer besonders steifen Stelle der Basis erfolgen. Sofern zwei Durchgangsöffnungen vorgesehen sind, ist es vorteilhaft, dass die Projektion des Profilschienenstücks auf die Grundplatte beide Durchgangsöffnungen zumindest bereichsweise überdeckt.

Insbesondere kann vorgesehen sein, dass die Grundplatte länglich, also mit einer langen Längsachse und einer kurzen Querachse ausgebildet ist.

Eine weitere Ausgestaltung der Erfindung liegt darin, dass die längliche Grundplatte zu zumindest einem ihrer Enden hin unter Bildung eines Verjüngungsbereichs schmäler wird. Vorzugsweise wird die längliche Grundplatte zu ihren beiden gegenüberliegenden Enden hin unter Bildung zweier Verjüngungsbereiche schmäler. Demgemäss kann die Grundplatte endseitig zumindest einen Verjüngungsbereich, vorzugsweise zwei gegenüberliegende Verjüngungsbereiche aufweisen. Diese Ausführungsform berücksichtigt, dass die volle Steifigkeit der Grundplatte in der Regel nur in der Mitte der Platte benötigt wird. Daher kann die Grundplatte an den Enden schmaler gestaltet werden, was die Materialkosten weiter senkt.

Sofern die Durchgangsöffnung längs der länglichen Grundplatte gesehen zumindest teilweise, insbesondere vollständig, in einem Verjüngungsbereich liegt, kann dies den weiteren Vorteil mit sich bringen, dass die Lastumverteilung aus dem Ankerbolzen in die stabilen Flankenelemente der Basis auf einem relativ kurzen Weg und damit relativ steif erfolgt.

Für einen noch besseren Anschluss der Basis an den Untergrund ist es vorteilhaft, dass die Grundplatte zumindest eine, vorzugsweise genau eine weitere Durchgangsöffnung aufweist. Durch die weitere Durchgangsöffnung ist vorzugsweise ein weiterer Ankerbolzen zum Verankern der Basis an der Wand hindurchführbar. Die weitere Durchgangsöffnung kann vorzugsweise zumindest eine weitere Lochachse definieren, die parallel zu einer Lochachse der ersten Durchgangsöffnung verläuft. Die weitere Durchgangsöffnung kann analog zur ersten Durchgangsöffnung ausgebildet sein und somit insbesondere ebenfalls einen Kragen aufweisen, als Langloch ausgebildet sein und/oder zumindest teilweise, insbesondere vollständig, in einem Verjüngungsbereich liegen. Die Längsachsen der beiden Durchgangsöffnungen können parallel oder senkrecht zueinander verlaufen.

Im Hinblick auf den Fertigungsaufwand ist es besonders vorteilhaft, dass die Auflageflügel dieselbe Materialstärke aufweisen wie die Grundplatte. Das Hutprofil der Basis kann insbesondere durch Tiefziehen erzeugt werden. Als Ausgangsmaterial für die Herstellung der Basis wird bevorzugt vorverzinktes Material verwendet. Die Basis und/oder das Schienenstück bestehen geeigneterweise aus einem Metallmaterial.

Hinsichtlich des Fertigungsaufwands ist es weiterhin besonders vorteilhaft, dass das Profilschienenstück an der Grundplatte der Basis befestigt ist. Die Verbindung kann beispielsweise eine Schweissverbindung sein. Grundsätzlich kann sie aber auch eine Formschluss-und/oder Reibschlussverbindung sein, die insbesondere an der Durchgangsöffnung wirken kann.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: die Basis einer ersten Ausführungsform einer erfindungsgemässen Konsole in perspektivischer Darstellung;
- Figur 2:: die Basis aus Figur 1 in Querschnittsansicht;
- Figur 3:: die Basis aus Figur 1 in Längsschnittsansicht;
- Figur 4:: eine zweite Ausführungsform einer erfindungsgemässen Konsole in Draufsicht;
- Figur 5:: die Konsole aus Figur 4 in einer ersten perspektivischen Darstellung;
- Figur 6:: die Konsole aus Figur 4 in einer zweiten perspektivischen Darstellung;
- Figur 7:: die Basis einer dritte Ausführungsform einer erfindungsgemässen Konsole in Draufsicht; und
- Figur 8:: die Basis aus Figur 7 in Längsschnittsansicht.

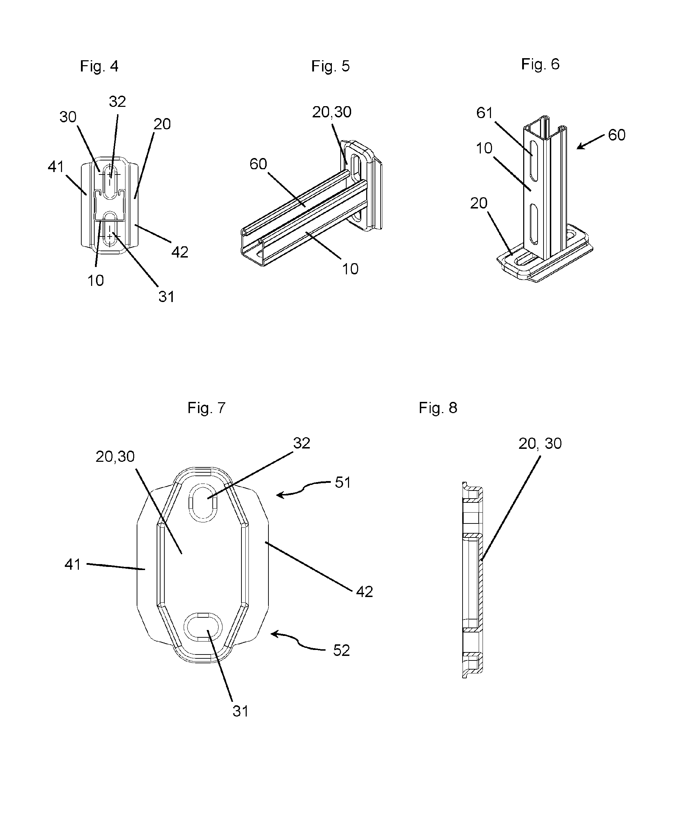

Der Übersichtlichkeit halber ist das Profilschienenstück nur beim Ausführungsbeispiel der Figuren 4 bis 6 gezeigt. Gleich wirkende Elemente sind in den Figuren mit denselben Bezugszeichen gekennzeichnet.

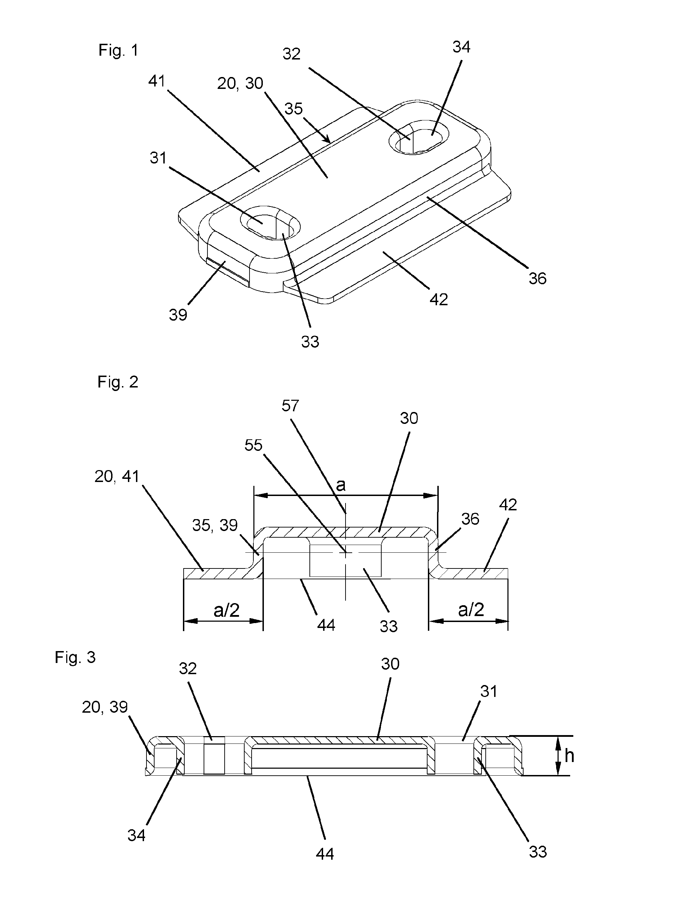

Eine Basis 20 einer Konsole gemäss einem ersten Ausführungsbeispiel der Erfindung ist in den Figuren 1 bis 3 gezeigt. Die Basis 20 weist eine längliche Grundplatte 30 auf, deren Umfang die Form eines abgerundeten Rechtecks hat. In der Grundplatte 30 sind in Längsrichtung beabstandet zwei Durchgangsöffnung 31, 32 vorgesehen. Die beiden Durchgangsöffnungen 31, 32 weisen parallele Lochachsen 57 auf und dienen zum Durchführen von Ankerbolzen zum Festlegen der Basis 20 an einer Gebäudewand.

Die Basis weist ferner zwei Auflageflügel 41, 42 auf, die zur Auflage der Basis 20 an der Gebäudewand dienen. Bei Draufsicht auf die Grundplatte 30, also bei Blickrichtung parallel zu den Lochachsen 57 durch die Durchgangsöffnungen 31, 32, erstrecken sich diese beiden Auflageflügel 41, 42 entlang den beiden Längsseiten der Grundplatte 30 und stehen auf gegenüberliegenden Seiten der Grundplatte 30 seitlich über die Grundplatte 30 über. Die Auflageflügel 41 und 42 sind in Richtung der Lochachsen 57 gegenüber der Grundplatte 30 versetzt und bilden eine gemeinsame Auflageebene 44, mit der die montierte Konsole auf der Gebäudewand aufliegen kann. In dieser Auflageebene 44 sind die beiden Auflageflügel 41 und 42 voneinander getrennt.

Die Auflageflügel 41 und 42 sind über jeweils ein Flankenelement 35 beziehungsweise 36 mit der Grundplatte 30 verbunden. Dabei stehen die Flankenelemente 35 und 36 einerseits senkrecht vom Rand des jeweiligen Auflageflügels 41 beziehungsweise 42 und andererseits senkrecht vom Rand der Grundplatte 30 ab, so dass die beiden koplanar verlaufenden Auflageflügel 41, 42, die beiden parallel zueinander verlaufenden Flankenelemente 35, 36 und die parallel und versetzt zu den Auflageflügeln 41, 42 verlaufende Grundplatte 30 im Querschnitt der Basis 20 (vgl. Figur 2) ein Hutprofil bilden.

Die beiden Flankenelemente 35 und 36 sind Bestandteile einer ringförmigen Zarge 39 die vom Umfang der Grundplatte 30 zur Auflageebene 44 hin vorsteht. Die Zarge 39 und die Grundplatte 30 bilden zusammen eine Napfform, die beispielsweise durch Tiefziehen hergestellt werden kann.

Wie Figur 2 zeigt, sind die Auflageflügel 41 und 41 jeweils gleich breit, wobei ihre Breite etwa die Hälfte (a/2) der Breite a der Grundplatte 30 beträgt. Hierdurch liegt der Massenschwerpunkt der Basis 20 nahe bei ihrem geometrischen Mittelpunkt 55, so dass das Widerstandsmoment und damit die Biegesteifigkeit möglichst gross sind.

Die beiden Durchgangsöffnungen 31, 32 weisen jeweils einen Kragen 33 beziehungsweise 34 auf, wobei die Kragen 33 und 34 von der Grundplatte 30 zur Auflageebene 44 vorstehen. Die Kragen 33 und 34 verhindern eine übermässige Deformation der Basis 20, wenn die Ankerbolzen in den Durchgangsöffnungen 31 beziehungsweise 32 angezogen werden. Wie insbesondere die Figuren 2 und 3 zeigen, reichen die Kragen 33 und 34 nicht ganz an die Auflageebene 44 heran, sondern enden kurz vor der Auflageebene, wobei der Abstand der Kragen 33 und 34 vorzugsweise kleiner ist als die Materialstärke der Basis 20. Die Höhe der Kragen 33 und 34 ist also kleiner als die Höhe h der Basis 20. Hierdurch wird gewährleistet, dass die Basis 20 primär an den Auflageflügeln 41 und 42 an der Wand anliegt.

Ein weiteres Ausführungsbeispiel einer Basis 20 für eine erfindungsgemässe Konsole ist in den Figuren 4 bis 6 gezeigt, wobei die Figuren 4 bis 6 auch das Profilschienenstück 10 der Konsole, mithin die gesamte Konsole zeigen.

Das Ausführungsbeispiel der Figuren 4 bis 6 unterschiedet sich vom Ausführungsbeispiel der Figuren 1 bis 3 im wesentlichen durch die Form und Anordnung der Durchgangsöffnungen 31 und 32 und der hiermit korrespondierenden Kragen 33 beziehungsweise 34. Sowohl gemäss Figuren 1 bis 3 also auch gemäss Figuren 4 bis 6 sind die beiden Durchgangsöffnungen 31 und 32 als Langlöcher ausgebildet. Gemäss Figuren 1 bis 3 stehen die Langlöcher 31 und 32 aber senkrecht zueinander, während sie gemäss Figuren 4 bis 6 gleich ausgerichtet und in Flucht zueinander, d.h. mit einer gemeinsamen Längsachse, verlaufen. Wie insbesondere Figur 4 zeigt, sind Durchgangsöffnungen 31 und 32 dabei so lang, dass sie unter das Profilschienenstück 10 reichen, d.h. die Projektion des Profilschienenstücks 10 in Längsrichtung des Profilschienenstücks 10 überdeckt einen Teil der Durchgangsöffnungen 31 und 32.

Das Profilschienenstück 10 weist, wie insbesondere in den Figuren 5 und 6 gezeigt, einen in Längsrichtung des Profilschienenstücks 10 verlaufenden Schlitz 60 auf, welcher durch zwei hinterschnittene Schenkel des Profilschienenstücks 10 begrenzt ist. Durch den Schlitz 60 kann zum Beispiel eine Hammerkopf- oder Hakenkopfschraube eingeführt werden, wobei die Schraube sodann durch Drehung formschlüssig an den hinterschnittenen, sich in Längserstreckung des Profilschienenstücks 10 erstreckenden Schenkeln festgelegt werden kann. Insbesondere kann Profilschienenstücks 10 im Querschnitt C-förmig ausgeführt sein. Darüber hinaus weist das Profilschienenstücks 10 auf seiner dem Schlitz 60 abgewandten Rückseite Langlöcher 61 auf, die zur Anbindung weiterer Elemente dienen können. Im dargestellten Ausführungsbeispiel fluchtet der Schlitz 60 mit der zweiten Durchgangsöffnung 32.

Das Profilschienenstück 10 ist an der Grundplatte 30 befestigt, z. B. angeschweisst, und steht von der Grundplatte 30 rechtwinklig ab. Ein Profilschienenstück 10 wie in den Figuren 4 bis 6 gezeigt kann auch bei den Ausführungsbeispielen der Figuren 1 bis 3 und Figuren 7 und 8 vorgesehen sein, wobei die Anordnung und Befestigung dort analog zu den Figuren 4 bis 6 erfolgen kann.

Eine dritte Ausführungsvariante der Basis einer erfindungsgemässen Konsole ist in den Figuren 7 und 8 gezeigt.

Bei der Ausführungsvariante der Figuren 7 und 8 hat die Grundplatte 30 eine an den Enden der Grundplatte 30 zusammenlaufende Formgebung. Insbesondere weist die Grundplatte 30 an ihren gegenüberliegenden Enden jeweils einen Verjüngungsbereich 51 beziehungsweise 52 auf, in dem die Breite der Grundplatte 30 zum jeweiligen Ende der Grundplatte 30 hin abnimmt. Die beiden Durchgangsöffnungen 31 und 32 liegen dabei vollständig in einem der Verjüngungsbereiche 51 beziehungsweise 52. Da die Breite der Auflageflügel 41 und 42 entlang der Grundplatte 30 konstant ist, nimmt entlang der Verjüngungsbereiche 51 und 52 auch die Breite der Basis 20 über alles zum jeweiligen Basisende hin ab.

## Patentansprüche

1. Konsole zum Befestigen einer Schienenanordnung an einer Wand, mit einer Basis (20), an der ein Profilschienenstück (10) befestigt ist,
wobei die Basis (20) eine Grundplatte (30) mit zumindest einer Durchgangsöffnung (31) aufweist, durch welche zum Verankern der Basis (20) an der Wand ein Ankerbolzen hindurchführbar ist,
**dadurch gekennzeichnet,**
**dass** die Basis (20) zwei Auflageflügel (41, 42) aufweist, welche eine Auflageebene (44) zur Auflage an der Wand bilden, und welche über jeweils ein Flankenelement (35 bzw. 36) mit der Grundplatte (30) verbunden sind, wobei die Auflageflügel (41, 42), die Flankenelemente (35, 36) und die Grundplatte (30) zumindest bereichsweise im Querschnitt der Basis (20) ein Hutprofil bilden.

2. Konsole nach Anspruch 1,
**dadurch gekennzeichnet,**
**dass** die beiden Flankenelemente (35, 36) gleich breit sind, wobei ihre Breite die Hälfte der Breite (a) der Grundplatte (30) beträgt.

3. Konsole nach einem der vorstehenden Ansprüche,
**dadurch gekennzeichnet,**
**dass** die Durchgangsöffnung (31) einen Kragen (33) aufweist, der sich ausgehend von der Grundplatte (30) zur Auflageebene (44) hin erstreckt.

4. Konsole nach Anspruch 3,
**dadurch gekennzeichnet,**
**dass** der Kragen (33) von der Auflageebene (44) beabstandet ist.

5. Konsole nach einem der vorstehenden Ansprüche,
**dadurch gekennzeichnet,**
**dass** die beiden Flankenelemente (35, 36) Bestandteile einer ringförmigen Zarge (39) sind, welche sich am Umfang der Grundplatte (30) an die Grundplatte (30) anschliesst.

6. Konsole nach einem der vorstehenden Ansprüche,
**dadurch gekennzeichnet,**
**dass** die beiden Auflageflügel (41, 42) in der Auflageebene (44) voneinander getrennt sind.

7. Konsole nach einem der vorstehenden Ansprüche,
**dadurch gekennzeichnet,**
**dass** die Durchgangsöffnung (31) ein Langloch ist, welches sich längs der Auflageflügel (41, 42) erstreckt.

8. Konsole nach einem der vorstehenden Ansprüche,
**dadurch gekennzeichnet,**
**dass** eine Projektion des Profilschienenstücks (10) auf die Grundplatte (30) die Durchgangsöffnung (31) zumindest bereichsweise überdeckt.

9. Konsole nach einem der vorstehenden Ansprüche,
**dadurch gekennzeichnet,**
**dass** die längliche Grundplatte (30) zu zumindest einem ihrer Enden hin unter Bildung eines Verjüngungsbereichs (51, 52) schmäler wird.

10. Konsole nach Anspruch 9,
**dadurch gekennzeichnet,**
**dass** die Durchgangsöffnung (31) längs der länglichen Grundplatte (30) gesehen zumindest teilweise in einem Verjüngungsbereich (51) liegt.

11. Konsole nach einem der vorstehenden Ansprüche,
**dadurch gekennzeichnet,**
**dass** die Grundplatte (30) zumindest eine weitere Durchgangsöffnung (32) aufweist.

12. Konsole nach einem der vorstehenden Ansprüche,
**dadurch gekennzeichnet,**
**dass** die Auflageflügel (41, 42) dieselbe Materialstärke aufweisen wie die Grundplatte (30).

13. Konsole nach einem der vorstehenden Ansprüche,
**dadurch gekennzeichnet,**
**dass** das Profilschienenstück (10) an der Grundplatte (30) befestigt ist.
